# DEMANDE DE BREVET EUROPEEN

(11) **EP 1 102 203 A1**
(43) Date de publication de la demande: **23.05.2001**
(21) Numéro de dépôt: 00403196.9
(22) Date de dépôt: 16.11.2000
(51) Int. Cl.: G06K 9/62, G06F 17/60, G06K 9/18, H04L 9/32, G07C 9/00, G07G 1/00

(54) **Terminal de paiement électronique**

(30) Priorité: 22.11.1999 FR 9914656
(71) Demandeur: SAGEM SA, 75016 Paris (FR)
(72) Inventeur: Viet, Christophe, 95800 Cergy Saint Christophe (FR)
(74) Mandataire: Gorrée, Jean-Michel

(57) **Abrégé**

Terminal de paiement électronique comportant : un lecteur de code-barres monodimensionnel (3, 4) pour identifier un produit de transaction et son prix ; un lecteur de code-barres bidimensionnel (3, 5) pour identifier une caractéristique biométrique et l'identité bancaire d'un acheteur du produit qui sont mémorisées sur un document détenu par l'acheteur ; un capteur (15) de caractéristique biométrique pour détecter sur l'acheteur une caractéristique biométrique de celui-ci ; des moyens comparateurs (14) pour comparer les caractéristiques biométriques lues sur l'acheteur par le capteur et par le lecteur de code-barres bidimensionnel sur le document de l'acheteur ; et des moyens (18) de validation de transaction placés sous la dépendance des moyens comparateurs et propres à valider la transaction lorsque les moyens comparateurs détectent l'identité des caractéristiques biométriques lues par le capteur sur l'acheteur et par le lecteur de code-barres bidimensionnel sur le document détenu par l'acheteur.

## Description

La présente invention concerne des perfectionnements apportés aux terminaux de paiement électronique.

Lors d'une transaction commerciale, il faut saisir les références du vendeur et de l'acheteur, ainsi que les références et le prix du produit de transaction, et effectuer le paiement qui, lorsqu'il est effectué par voie électronique, nécessite en outre une saisie des références bancaires du vendeur et de l'acheteur pour déclencher une opération transactionnelle, laquelle, pour être instantanée, nécessite une saisie du code confidentiel de l'acheteur et éventuellement de celui du vendeur parallèlement à une opération de lecture de la carte bancaire de l'acheteur.

On connaît les limites et les inconvénients d'un tel processus transactionnel, qui tiennent pour beaucoup à une insuffisance de l'identification des intervenants, et notamment de l'acheteur.

On sait aujourd'hui accroître la sécurité d'identification d'une personne en complétant, voire en remplaçant l'identification par code confidentiel par une identification complémentaire biométrique. Diverses caractéristiques biométriques d'un individu peuvent être exploitées à des fins de contrôle (empreintes digitales, voix, motif de l'iris de l'oeil, forme du visage, ...).

Toutefois, la caractéristique biométrique qui semble actuellement être la plus facilement exploitable sur une très grande échelle avec un matériel relativement simple est constituée par les empreintes digitales d'un ou plusieurs doigts d'une main de l'individu.

Il existe actuellement des matériels fiables et performants pour le relevé des empreintes digitales et leur traitement, sous forme de signaux numériques.

L'invention a donc essentiellement pour but de proposer un nouveau terminal de paiement électronique mettant en oeuvre les techniques récentes d'identification d'un individu par détection de caractéristiques biométriques, afin d'accroître la sécurité et de faciliter (il n'est plus nécessaire de mémoriser un code secret) des transactions avec paiement électronique.

A ces fins, un terminal de paiement électronique conforme à l'invention se caractérise en ce qu'il comporte :
- un lecteur de code-barres monodimensionnel pour identifier un produit de transaction et son prix ;
- un lecteur de code-barres bidimensionnel pour identifier au moins une caractéristique biométrique et l'identité bancaire d'un acheteur du produit qui sont mémorisées sur un document détenu par l'acheteur ;
- un capteur de caractéristique biométrique pour détecter sur l'acheteur au moins une caractéristique biométrique de celui-ci ;
- des moyens comparateurs pour comparer la caractéristique biométrique lue sur l'acheteur par le capteur avec celle lue par le lecteur de code-barres bidimensionnel sur le document de l'acheteur ; et
- des moyens de validation de transaction placés sous la dépendance desdits moyens comparateurs et propres à valider la transaction lorsque les moyens comparateurs détectent l'identité de la caractéristique biométrique lue par le capteur sur l'acheteur et de la caractéristique biométrique lue par le lecteur de code-barres bidimensionnel sur le document détenu par l'acheteur.

Eventuellement, on peut souhaiter une identification de même nature du vendeur, et alors on peut prévoir que :
- le lecteur de code-barres bidimensionnel est également propre à identifier au moins une caractéristique biométrique du vendeur qui est mémorisée sur un document détenu par le vendeur ;
- le capteur de caractéristique biométrique est apte à détecter sur le vendeur au moins une caractéristique biométrique de celui-ci ;
- les moyens comparateurs sont aptes à comparer la caractéristique biométrique lue sur le vendeur par le capteur avec celle lue par le lecteur de code-barres bidimensionnel sur le document du vendeur ;
- et les moyens de validation de transaction placés sous la dépendance desdits moyens comparateurs sont propres à valider la transaction lorsque les moyens comparateurs détectent l'identité de la caractéristique biométrique lue par le capteur sur le vendeur et de la caractéristique biométrique lue par le lecteur de code-barres bidimensionnel sur le document détenu par le vendeur.

De façon concrète et pratique, le document détenu par l'acheteur, et éventuellement le document détenu par le vendeur sont des cartes à microcircuits électroniques.

Pour des applications de très grande diffusion, on prévoit que la caractéristique biométrique de l'acheteur et éventuellement du vendeur est constituée par les empreintes digitales d'au moins un de ses doigts de main.

De préférence, l'appareil comporte des moyens de reconnaissance d'identité bancaire de l'acheteur, et éventuellement du vendeur, qui sont placés sous la dépendance du lecteur de code-barres bidimensionnel et les moyens de validation de transaction sont placés sous la dépendance desdits moyens de reconnaissance d'identité bancaire. Pour ce qui concerne l'information d'identité bancaire, il peut s'agir de l'identité bancaire proprement dite, ou bien d'un identifiant de l'acheteur et/ou du vendeur alors que l'identité bancaire est disponible par ailleurs (par exemple carte à puce ou carte à bande magnétique).

On constitue ainsi, grâce aux dispositions de l'invention, un appareil extrêmement complet et performant qui est apte à recueillir et à traiter toutes les données relatives à une transaction et qui, lorsque toutes les conditions nécessaires à l'exécution de la transaction sont réunies, conclut la transaction. Un tel appareil peut, pour son fonctionnement, faire appel à certaines étapes d'exécution manuelle, mais peut aussi donner lieu à des réalisations entièrement automatisées pouvant éventuellement mettre en jeu des liaisons à distance par exemple par téléphone et/ou par radio pour recueillir certaines informations (identifications bancaires notamment).

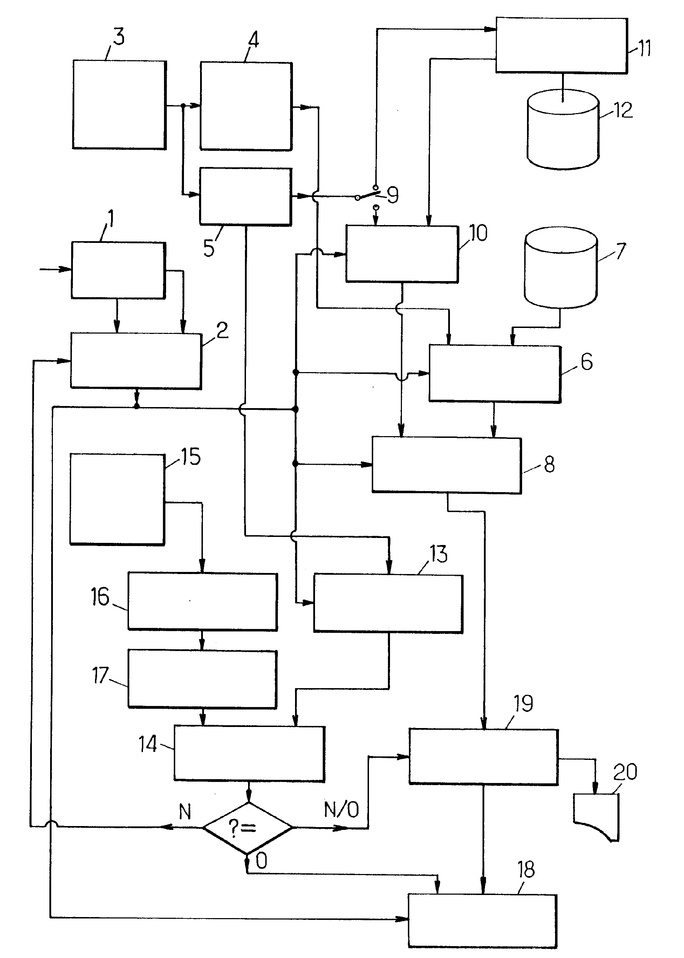

L'invention sera mieux comprise à la lecture de la description détaillée qui suit d'un mode de réalisation préféré donné uniquement à titre d'exemple non limitatif. Dans cette description, on se réfère au dessin annexé sur lequel la figure unique est un schéma synoptique ou schéma-blocs fonctionnel d'un mode de réalisation préféré d'un terminal de paiement électronique agencé conformément à l'invention.

Le terminal schématisé sur la figure unique comprend une pluralité de dispositifs de recueil des données nécessaires à l'exécution de la transaction.

D'une façon classique, un clavier de commande 1 est relié à des moyens de gestion de la transaction 2, de manière que des ou certaines informations puissent être entrées en cas de nécessité (fonctionnement non totalement automatisé).

Des lecteurs de codes-barres sont prévus pour lire respectivement des codes-barres monodimensionnels (codes-barres apposés sur des produits de la transaction, et correspondant à l'identification des produits et à leur prix) et des codes-barres bidimensionnels (codes-barres monodimensionnels empilés en plusieurs couches pour accroître la capacité d'informations : mémorisation d'une caractéristique biométrique et coordonnées bancaires de l'acheteur, et éventuellement du vendeur, par exemple). Dans l'exemple illustré, on a supposé la mise en oeuvre d'un seul lecteur de code barres 3 fonctionnellement agencé pour pouvoir lire les codes-barres monodimensionnels (en 4) et bidimensionnels (en 5).

Le lecteur de code-barres monodimensionnel 3, 4 est relié à des moyens 6 de reconnaissance, à partir des codes-barres, des produits et de leur prix, moyens 6 qui sont eux-mêmes raccordés à (ou qui incorporent) des moyens de mémorisation 7 renfermant les codes produits et les prix correspondants. Ces moyens de reconnaissance 6 sont raccordés à une des entrées de moyens 8 d'élaboration de la transaction, placés sous la dépendance d'autres moyens comme expliqué plus loin.

Le lecteur de code-barres bidimensionnel 3, 5 lit le code-barres bidimensionnel qui est inclus dans un document détenu par l'acheteur (par exemple une carte) et qui contient notamment :
- des informations sur l'identité bancaire de l'acheteur, et
- des informations sur une caractéristique biométrique de l'acheteur.

Les informations relatives à l'identité bancaire de l'acheteur peuvent être l'identité bancaire proprement dite de l'acheteur, ou bien un identifiant de l'acheteur alors que son identité bancaire est disponible par ailleurs (par exemple carte à puce ou carte à bande magnétique).

Les informations sur l'identité bancaire de l'acheteur peuvent soit (fonction OU 9) être traitées directement par des moyens 10 de reconnaissance d'identité bancaire inclus dans l'appareil (par exemple lorsque l'acheteur est connu du vendeur, ou pour des sommes transactionnelles inférieures à un seuil préétabli, ou pour des produits déterminés), soit être transmises (ligne téléphonique, radio) à un centre de reconnaissance d'identité bancaire 11 qui détient des informations mémorisées 12 (par exemple centre bancaire) et qui en retour fournit un accord ou un refus aux moyens 10 précités. Les moyens 10 de reconnaissance d'identité bancaire sont eux-mêmes connectés à une autre entrée des moyens 8 d'élaboration de la transaction.

Les informations sur la caractéristique biométrique de l'acheteur sont traitées par des moyens 13 de reconnaissance de caractéristique biométrique, eux-mêmes raccordés à des moyens comparateurs 14.

En tant qu'autre dispositif de recueil de données, le terminal dispose d'un lecteur de caractéristique biométrique 15 propre à lire une caractéristique biométrique de l'acheteur. Ces informations sont traitées par des moyens 16 de capture de la caractéristique biométrique, puis sur cette caractéristique des moyens identificateurs 17 détectent les points caractéristiques propres à l'acheteur et ces informations sont délivrées aux susdits moyens comparateurs 14.

Si le résultat de la comparaison des caractéristiques biométriques lues directement sur l'acheteur en 15 et de celles mémorisées (par exemple en pratique sur une carte détenue par l'acheteur) et lues par le lecteur de code-barres 3, 5 est négatif, une information N est transmise aux moyens 2 de gestion de la transaction pour stopper celle-ci.

Si le résultat de la comparaison est positif, une information O est envoyée à des moyens 18 d'émission de la transaction.

Quel que soit le résultat de la comparaison, les moyens comparateurs commandent des moyens d'impression 19, qui sont placés sous la dépendance des susdits moyens 8 d'élaboration de la transaction et qui, d'une part, sont raccordés aux susdits moyens 18 d'émission de la transaction et, d'autre part, émettent une fiche ou ticket 20 traduisant l'état d'aboutissement de la transaction, son prix et toutes autres données habituelles.

On notera que les moyens 2 de gestion de la transaction sont, à ce titre, connectés aux divers niveaux fonctionnels précités, et notamment aux moyens 10 de reconnaissance d'identité bancaire, aux moyens 6 de reconnaissance des produits et de leur prix, aux moyens 8 d'élaboration de la transaction, aux moyens 13 de reconnaissance de la caractéristique biométrique de l'acheteur, aux moyens 18 d'émission de la transaction, lesdits moyens 2 de gestion de la transaction étant, comme déjà indiqué, placés sous la dépendance des moyens comparateurs 14.

Il est habituel qu'un terminal de paiement électronique soit agencé pour identifier l'acheteur et établir son identité bancaire, comme cela a été indiqué précédemment.

Il peut en outre être requis que le vendeur soit, lui-même, tenu de s'identifier et éventuellement d'établir son identité bancaire. On peut certes à cet effet ajouter au terminal précédemment décrit les diverses fonctions d'identification du vendeur. Toutefois, faisant double emploi avec les fonctions décrites d'identification de l'acheteur, les mêmes moyens peuvent être utilisés pour les identifications successives du vendeur et de l'acheteur. A cette fin, le vendeur est muni d'un document, tel qu'une carte, renfermant les informations le concernant. Cette identification peut être totale ou partielle.

Concernant la caractéristique biométrique d'identification de l'acheteur (et éventuellement du vendeur), elle peut être de nature diverse : empreintes digitales d'au moins un doigt d'une main, motif de l'iris d'au moins un oeil, forme du visage, voix, etc... En pratique, les moyens de reconnaissance actuellement les mieux développés et les plus fiables pour une utilisation à très grande échelle sont ceux concernant les empreintes digitales, et ils peuvent en pratique porter sur les empreintes d'un seul doigt, mais peuvent aussi porter sur celles de tous les doigts d'une main ou des deux mains selon le niveau d'identification requis et le niveau du prix de l'installation.

De plus, bien que cela n'ai pas été illustré sur le dessin pour des raisons de clarté, l'identification de l'acheteur par ses empreintes digitales peut être couplée avec l'identification traditionnelle par code confidentiel traitée par un microcircuit présent dans la carte de l'acheteur.

Un terminal agencé tel qu'il vient d'être décrit maintient la faculté d'une intervention manuelle (clavier 1) pour une part plus ou moins grande de l'élaboration de la transaction tout en conservant un degré de sécurité très élevé pour l'identification de l'acheteur et éventuellement du vendeur. Toutefois une automatisation très poussée, voire totale, est réalisable et conserve le même niveau élevé de sécurité.

## Revendications

1. Terminal de paiement électronique, caractérisé en ce qu'il comporte :
- un lecteur de code-barres monodimensionnel (3, 4) pour identifier un produit de transaction et son prix ;
- un lecteur de code-barres bidimensionnel (3, 5) pour identifier au moins une caractéristique biométrique et l'identité bancaire d'un acheteur du produit qui sont mémorisées sur un document détenu par l'acheteur ;
- un capteur (15) de caractéristique biométrique pour détecter sur l'acheteur au moins une caractéristique biométrique de celui-ci ;
- des moyens comparateurs (14) pour comparer la caractéristique biométrique lue sur l'acheteur par le capteur avec celle lue par le lecteur de code-barres bidimensionnel sur le document de l'acheteur ; et
- des moyens (18) de validation de transaction placés sous la dépendance desdits moyens comparateurs et propres à valider la transaction lorsque les moyens comparateurs détectent l'identité de la caractéristique biométrique lue par le capteur sur l'acheteur et de la caractéristique biométrique lue par le lecteur de code-barres bidimensionnel sur le document détenu par l'acheteur.

2. Terminal selon la revendication 1, caractérisé en ce que :
- le lecteur de code-barres bidimensionnel (3, 5) est également propre à identifier au moins une caractéristique biométrique du vendeur qui est mémorisée sur un document détenu par le vendeur ;
- le capteur (15) de caractéristique biométrique est apte à détecter sur le vendeur au moins une caractéristique biométrique de celui-ci ;
- les moyens comparateurs sont aptes à comparer la caractéristique biométrique lue sur le vendeur par le capteur avec celle lue par le lecteur de code-barres bidimensionnel sur le document du vendeur ;
- et les moyens (18) de validation de transaction placés sous la dépendance desdits moyens comparateurs sont propres à valider la transaction lorsque les moyens comparateurs détectent l'identité de la caractéristique biométrique lue par le capteur sur le vendeur et de la caractéristique biométrique lue par le lecteur de code-barres bidimensionnel sur le document détenu par le vendeur.

3. Terminal selon la revendication 1 ou 2, caractérisé en ce que le document détenu par l'acheteur, et éventuellement le document détenu par le vendeur sont des cartes à microcircuits électroniques.

4. Terminal selon l'une quelconque des revendications 1 à 3, caractérisé en ce que la caractéristique biométrique utilisée pour l'identification de l'acheteur, et éventuellement du vendeur est constituée par les empreintes digitales d'au moins un doigt de l'acheteur, et éventuellement du vendeur.

5. Terminal selon l'une quelconque des revendications précédentes, caractérisé en ce qu'il comporte des moyens (10) de reconnaissance d'identité bancaire de l'acheteur, et éventuellement du vendeur, qui sont placés sous la dépendance du lecteur de code-barres bidimensionnel et en ce que les moyens (18) de validation de transaction sont placés sous la dépendance desdits moyens de reconnaissance d'identité bancaire.
